# FASCICULE DE BREVET EUROPEEN

(11) **EP 0 789 233 B1**
(45) Date de publication et mention de la délivrance du brevet: **18.07.2001**
(21) Numéro de dépôt: 97400243.8
(22) Date de dépôt: 04.02.1997
(51) Int. Cl.: G01H 3/00, G01V 13/00

(54) **Procédé de test d'une antenne acoustique en réseau**
Verfahren zur Prüfung einer akustische Wandleranordnungantenne
Test procedure for an acoustic array antenna

(30) Priorité: 12.02.1996 FR 9601676
(43) Date de publication de la demande: 13.08.1997
(73) Titulaire: Remtech, 78143 Velizy Cedex (FR)
(72) Inventeur: Fage, Jean-Michel, 75004 - Paris (FR); Tasso, Rémy, 78117 Chateaufort (FR)
(74) Mandataire: Cabinet Martinet & Lapoux

(56) Documents cités:
- EP-A- 0 433 652
- GB-A- 2 256 273
- US-A- 3 859 620
- US-A- 4 205 394
- OCEAN TECHNOLOGIES AND OPPORTUNITIES IN THE PACIFIC FOR THE 90'S, HONOLULU, OCT. 1 - 3, 1991, vol. VOL. 3, no. -, 1 Octobre 1991, INSTITUTE OF ELECTRICAL AND ELECTRONICS ENGINEERS, pages 1546-1549, XP000279664 HOLLAND J P: "A LARGE SHIPBOARD PASSIVE SONAR ARRAY CALIBRATION TECHNIQUE"
- JOURNAL OF THE ACOUSTICAL SOCIETY OF AMERICA, vol. 100, no. 1, Juillet 1996, pages 400-407, XP000623722 DOUGLAS B L ET AL: "SINGLE-REFERENCE CALIBRATION TECHNIQUE FOR MULTIPLE-ELEMENT ARRAY SONAR IMAGING SYSTEMS"

## Description

L'invention concerne un procédé de test d'une antenne acoustique en réseau, telle en particulier qu'une antenne utilisable pour la mesure à distance de la vitesse tridimensionnelle d'un fluide tel que de l'air ou de l'eau, notamment de l'air atmosphérique à différentes tranches d'altitude.

Des antennes de ce type sont déjà décrites par exemple dans la Demande de Brevet EP-A-0.640.845 de la Demanderesse. Elles comprennent essentiellement un réseau de transducteurs acoustiques qui sont agencés en rangées et en colonnes et orientés dans une même direction, et qui sont pilotés par des moyens de génération et de traitement de signaux, les transducteurs servant d'emetteurs et de récepteurs.

Pour déterminer la vitesse du fluide, on émet des signaux de fréquences données dans des directions différentes, on capte les signaux rétrodiffusés par le fluide, on mesure leurs fréquences et on calcule la vitesse du fluide dans une direction à partir du décalage en fréquence entre les signaux émis et les signaux captés dans cette direction.

Le niveau très faible des signaux rétrodiffusés par le fluide rend ces mesures très délicates. Elle ne peuvent être réalisées correctement que si l'antenne et les moyens associés de câblage, de relais, d'amplification et de traitement sont dans un état "nominal" connu de fonctionnement. Il est cependant difficile, voire même impossible sur les sites d'installation des antennes, de vérifier cet état de fonctionnement, notamment en raison du câblage des transducteurs en groupes qui fait que, du point de vue de la génération et du traitement des signaux, une antenne comprenant par exemple 52, 196 ou 432 transducteurs apparaît comme constituée seulement de quelques émetteurs-récepteurs alimentés par deux voies reliées à un système de traitement de l'information.

Le document "Ocean Technologies and Opportunities in the Pacific for the 90's", Honolulu, Oct. 1-3, 1991, vol. 3, n° - , 1 Octobre 1991, I.E.E.E. pages 1546-1549, "a large shipboard passive sonar array calibration technique", décrit un procédé de test d'un ensemble d'hydrophones montés en ligne, qui consiste à comparer entre eux les signaux de sortie des hydrophones individuels pour détecter les hydrophones en panne. Un tel procédé n'est pas applicable au test d'une antenne acoustique en réseau, en raison du câblage des transducteurs en groupes.

La présente invention a pour but de fournir une solution simple et efficace à ce problème.

Elle propose à cet effet un procédé de test d'une antenne acoustique en réseau, comprenant une pluralité de transducteurs acoustiques agencés côte à côte en configuration matricielle ou similaire et associés en groupes pilotés par des moyens de génération et de traitement de signaux, caractérisé en ce qu'il consiste à utiliser au moins un transducteur acoustique du type non-directionnel pour recevoir un même signal simultanément sur ce transducteur et sur l'antenne et à comparer les signaux reçus pour identifier d'éventuels "échos fixes" dans le signal reçu par l'antenne et à vérifier si l'antenne et les circuits associés sont ou non dans un état nominal de fonctionnement.

L'invention est basée sur le fait qu'une antenne acoustique en réseau a une directivité très forte et qu'en conséquence elle reçoit avec une atténuation très importante les signaux propagés dans des directions différentes de celle du lobe principal de son diagramme de rayonnement. Par contre, un transducteur non-directionnel va capter à peu près de la même façon tous les signaux quelles que soient leurs directions de propagation. La comparaison des signaux captés par l'antenne et des signaux captés par ce transducteur non-directionnel permet donc de recueillir des informations, soit sur le type du signal capté, soit sur l'état de fonctionnement de l'antenne et des moyens associés de câblage, de relais, d'amplification et de traitement, en supposant bien entendu que le transducteur non-directionnel précité est dans un état nominal de fonctionnement.

Le procédé selon l'invention peut donc consister à émettre au moyen de l'antenne un train de signaux, à recevoir au moyen de l'antenne et dudit transducteur non-directionnel des signaux rétrodiffusés ou réfléchis correspondant aux signaux émis, et à comparer les signaux reçus par l'antenne et par ledit transducteur pour identifier les échos fixes.

Avantageusement, on peut utiliser plusieurs (de préférence trois) transducteurs non-directionnels pour recevoir les signaux précités, et déduire des signaux reçus la direction et la distance des objets ou obstacles renvoyant les échos fixes.

L'identification des échos fixes est importante dans la mesure où ces derniers peuvent masquer un signal utile de plus faible amplitude.

Le procédé selon l'invention consiste également à capter le bruit ambiant au moyen de l'antenne et dudit transducteur non-directionnel, à comparer les signaux captés et à en déduire si l'antenne et les circuits associés sont ou non dans un état nominal de fonctionnement.

Selon une autre caractéristique de l'invention, ce procédé consiste également à émettre un train de signaux d'abord sur une des voies d'émission, puis sur l'autre, à capter ces trains de signaux au moyen dudit transducteur, à comparer les signaux captés et à en déduire si chaque voie d'émission est ou non dans un état nominal de fonctionnement.

Le ou les transducteurs non-directionnels précités qui sont utilisés pour ces vérifications, peuvent être soit des transducteurs de l'antenne, soit des transducteurs indépendants de ceux de l'antenne.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 représente schématiquement un réseau de transducteurs acoustiques constituant une antenne selon l'invention ;
- la figure 2 représente schématiquement les circuits associés au réseau de transducteurs acoustiques ;
- la figure 3 représente schématiquement les diagrammes de rayonnement d'une antenne acoustique et d'un transducteur non-directionnel.

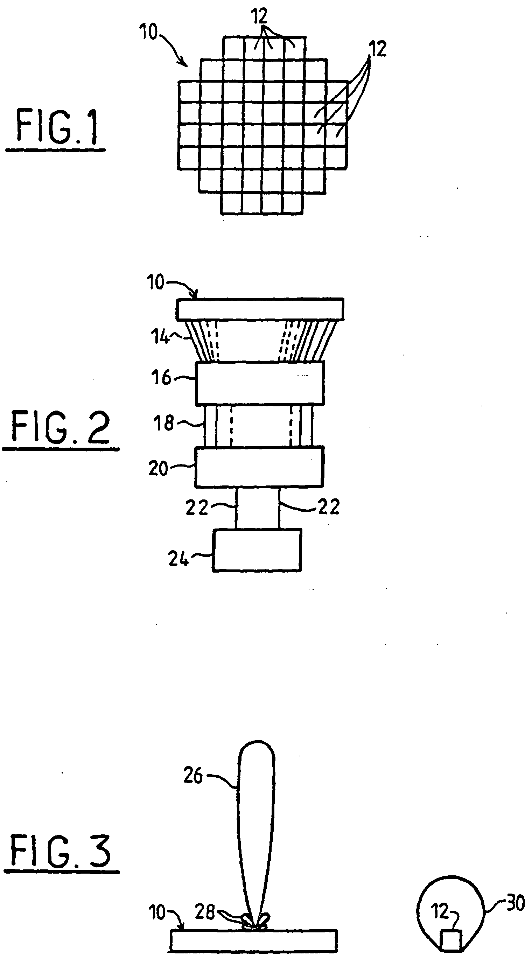

Le réseau 10 de transducteurs acoustiques 12 représenté en figure 1 comprend 52 transducteurs acoustiques qui sont agencés côte à côte avec une disposition matricielle en lignes et en colonnes et qui sont tous orientés dans une même direction (la perpendiculaire au plan du dessin).

Ce réseau de transducteurs constitue une antenne acoustique dont le principe de fonctionnement est décrit, par exemple, dans la Demande de Brevet EP-A-0.640.845 précitée de la Demanderesse.

Dans une antenne de ce type, on alimente des lignes de transducteurs 12 par des signaux de fréquence déterminée qui sont déphasés d'une ligne de transducteurs à l'autre, ce qui détermine une première direction d'émission, puis on alimente ces lignes de transducteurs avec des signaux de même fréquence, mais avec un autre déphasage d'une ligne à l'autre, ce qui détermine une deuxième direction d'émission, et ainsi de suite, la direction d'émission étant perpendiculaire au plan du réseau de transducteurs quand tous les transducteurs sont alimentés par des signaux de même fréquence en phase.

A la réception, les signaux rétrodiffusés qui sont captés par les transducteurs sont combinés entre eux et traités pour obtenir en séquence ou simultanément autant de signaux de réception que de directions d'émission.

La figure 2 représente schématiquement un exemple de réalisation des moyens associés à l'antenne acoustique 10 de la figure 1, ces moyens comprenant un câblage 14 reliant des groupes de transducteurs 12 de l'antenne à un ensemble de relais 16, un câblage 18 reliant les relais à des moyens 20 d'amplification et de filtrage, et deux voies 22 reliant ces moyens d'amplification et de filtrage à un système 24 de traitement de l'information, tel qu'un micro-ordinateur.

C'est ce câblage de type arborescent qui rend difficile de détecter l'état défectueux d'un élément, ou d'un groupe d'éléments, sauf à tester sur place chaque élément pendant que l'antenne émet.

C'est pourquoi l'invention propose un procédé permettant de tester automatiquement, en réception et en émission, une antenne acoustique du type représenté aux figures 1 et 2.

Pour cela, on tire parti du fait qu'une antenne acoustique 10 a, dans un état "nominal" de fonctionnement, une directivité très élevée, son diagramme de rayonnement présentant (figure 3) un lobe principal 26 dans la direction d'émission ou de réception, avec à sa base de très petits lobes secondaires 28 dans des directions orientées à plusieurs dizaines de degrés de la direction d'émission ou de réception, le lobe principal 26 étant beaucoup plus important que les lobes secondaires 28 de sorte que le bruit ambiant qui se propage en général parallèlement au plan de l'antenne 10 est capté par celle-ci avec une atténuation très forte par rapport à un signal capté dans l'axe du lobe principal 26, cette atténuation étant par exemple de l'ordre de 50 dB.

Au contraire, un transducteur acoustique 12 isolé (du même type que ceux de l'antenne 10) n'est pas du type directif et son diagramme de rayonnement 30 est presque sphérique, comme représenté schématiquement en figure 3.

Ainsi, lorsqu'on utilise une antenne acoustique 10 du type précité et un transducteur isolé 12 pour capter le bruit ambiant dans le site d'installation de l'antenne 10, le rapport des intensités du bruit capté par l'antenne 10 et du bruit capté par le transducteur isolé 12 est normalement inférieur à un certain seuil. Si ce n'est pas le cas, l'augmentation du niveau de bruit dans le signal de réception en sortie de l'antenne 10 peut être dûe à plusieurs causes :
- l'antenne 10 a pu capter un bruit qui ne se propageait pas sensiblement parallèlement à son plan, mais davantage dans la direction du lobe principal 26,
- un vieillissement des transducteurs 12 de l'antenne 10 a pu provoquer une augmentation de la dispersion en amplitude et/ou en phase entre ces transducteurs,
- les branchements des transducteurs entre eux ou entre les transducteurs et les circuits électroniques de commande peuvent être défectueux,
- les circuits électroniques de commande peuvent être défectueux.

Les interventions nécessaires sont différentes d'un cas à l'autre. Si l'antenne 10 capte un bruit qui ne se propage pas parallèlement à son plan, il sera souvent suffisant de déplacer l'antenne 10. Dans les autres cas, on change le boîtier électronique et on renvoie le boîtier défectueux en usine où l'on peut intervenir sur le câblage ou sur les circuits électroniques de commande.

Quoi qu'il en soit, ce test très simple aura suffi pour vérifier si l'antenne acoustique 10 est dans un état nominal de fonctionnement en réception.

L'invention prévoit également de vérifier l'état de l'antenne en émission et de détecter les échos fixes sur le site d'installation.

En ce qui concerne l'état de l'antenne en émission, on peut émettre, à intervalles plus ou moins réguliers, des signaux uniquement sur l'une des deux voies 22, puis uniquement sur l'autre de ces deux voies.

Les signaux émis sont captés par le transducteur isolé 12 dont les signaux de sortie sont comparés entre eux. Si les signaux correspondant aux signaux émis sur l'une des deux voies 22 ont la même énergie que ceux correspondant aux signaux émis sur l'autre voie 22, cette énergie étant compatible avec celle prévue pour une puissance à l'émission nominale sur l'antenne acoustique 10, on peut en conclure que cette antenne est dans un état nominal de fonctionnement en émission.

Lorsque les signaux de sortie du transducteur isolé 12 diffèrent lorsque l'on change de voie d'émission sur l'antenne acoustique 10, on constate que l'antenne n'est pas dans un état nominal de fonctionnement en émission, les défauts pouvant avoir des causes multiples : mauvaise génération par les moyens 24 du signal émis, défaut de l'une ou de l'autre des voies des moyens 20 d'amplification, mauvais état des relais, défaut de câblage.

La combinaison de l'antenne et du transducteur isolé 12 permet également de détecter d'éventuels échos fixes qui sont des signaux renvoyés directement (sans décalage de fréquence) par des obstacles situés au voisinage plus ou moins proche du site d'installation de l'antenne acoustique et qui sont susceptibles de masquer un signal utile. Ces échos fixes sont en général captés par les lobes secondaires 28 de l'antenne acoustique 10, avec une atténuation très forte par rapport aux signaux captés par le lobe principal 26. Ces échos fixes peuvent également être captés par le transducteur acoustique isolé 12 avec une atténuation beaucoup plus faible, le gain des signaux captés par le transducteur isolé étant le même pour les échos fixes et pour les signaux rétrodiffusés par le fluide, de sorte qu'une comparaison des signaux reçus par l'antenne 10 et par le transducteur isolé 12 permet d'identifier les échos fixes.

En utilisant trois transducteurs isolés 12 répartis autour de l'antenne acoustique 10, on peut non seulement détecter les échos fixes, mais également déterminer la direction et la distance des obstacles qui génèrent ces échos fixes.

L'installation d'un ou plusieurs transducteurs isolés 12 dans le voisinage de l'antenne acoustique 10 permet également de traiter des signaux de bruit pour les éliminer des signaux captés par l'antenne acoustique 10 et augmenter ainsi le rapport signal/bruit de l'antenne. Ces bruits sont en effet captés avec des atténuations différentes par l'antenne 10 et par le ou les transducteurs isolés 12 et on peut, connaissant la fonction de transfert en phase et en amplitude entre l'antenne acoustique et le ou les transducteurs isolés 12, soustraire ces signaux de bruit du signal utile capté par l'antenne acoustique.

Le transducteur isolé 12 représenté en figure 3, qui est utilisé pour le test de l'antenne, la détection des échos fixes, le traitement des signaux de bruit, peut être un transducteur indépendant de l'antenne 10 ou bien l'un des transducteurs de cette antenne, moyennant un câblage adéquat.

Les tests selon l'invention sont avantageusement réalisés en temps réel et de façon régulière et leurs résultats sont conservés en mémoire et comparés entre eux, ce qui permet de mettre en évidence la stabilité et le caractère nominal de l'antenne et des circuits associés ou éventuellement de quantifier le niveau de dégradation du matériel (antenne et circuits associés).

## Revendications

1. Procédé de test d'une antenne acoustique en réseau, comprenant une pluralité de transducteurs acoustiques (12) agencés côte à côte en configuration matricielle ou analogue et associés en groupes pilotés par des moyens (24) de génération et de traitement de signaux, caractérisé en ce qu'il consiste à utiliser au moins un transducteur acoustique (12) du type non-directionnel pour recevoir un même signal simultanément sur ce transducteur (12) et sur l'antenne (10) et à comparer les signaux reçus pour identifier d'éventuels échos fixes dans le signal reçu par l'antenne et vérifier si l'antenne (10) et les circuits associés (14, 16, 18, 20, 22, 24) sont ou non dans un état nominal de fonctionnement.

2. Procédé selon la revendication 1, caractérisé en ce qu'il consiste à émettre au moyen de l'antenne (10) un train de signaux, à recevoir au moyen de l'antenne (10) et du transducteur non-directionnel (12) des signaux rétrodiffusés ou réfléchis correspondant aux signaux émis, et à comparer les signaux reçus par l'antenne et par ledit transducteur pour identifier les échos fixes.

3. Procédé selon la revendication 1 ou 2, caractérisé en ce qu'il consiste à utiliser plusieurs transducteurs non-directionnels (12) pour recevoir lesdits signaux, et à déduire des signaux reçus la direction et la distance des obstacles renvoyant les échos fixes.

4. Procédé selon l'une des revendications précédentes, caractérisé en ce. qu'il consiste à capter le bruit ambiant au moyen de l'antenne (10) et dudit transducteur non-directionnel (12), à comparer les signaux captés et à en déduire si l'antenne (10) et les moyens associés de câblage (14, 18, 22) de relais (16), d'amplification (20), de génération et de traitement de signaux (24) sont ou non dans un état nominal de fonctionnement.

5. Procédé selon l'une des revendications précédentes, caractérisé en ce qu'il consiste à émettre un train de signaux d'abord sur une des voies d'émission (22), puis sur l'autre, à capter ces trains de signaux au moyen dudit transducteur non-directionnel (12), à comparer les signaux captés et à en déduire si les voies d'émission sont ou non dans un état nominal de fonctionnement.

6. Procédé selon l'une des revendications précédentes, caractérisé en ce qu'il consiste à capter le bruit ambiant au moyen du transducteur non-directionnel (12), à le traiter au moyen de la fonction de transfert en phase et en amplitude entre ce transducteur et l'antenne (10) et à le soustraire du signal capté par l'antenne pour augmenter le rapport signal/bruit de l'antenne.

7. Procédé selon l'une des revendications précédentes, caractérisé en ce que le transducteur non-directionnel (12) précité est un transducteur de l'antenne ou bien un transducteur indépendant de ceux de l'antenne.

8. Procédé selon l'une des revendications précédentes, caractérisé en ce que les tests précités sont réalisés en temps réel et de façon régulière et en ce que les résultats des tests sont conservés en mémoire et comparés entre eux pour mettre en évidence la stabilité et le caractère nominal de l'antenne et des circuits associés ou éventuellement pour quantifier le niveau de dégradation de l'antenne et des circuits associés.

## Patentansprüche

1. Verfahren zur Prüfung einer akustischen Wandleranordnungsantenne, umfassend ein Vielzahl von Schallwandlern (12), welche Seite an Seite in Matrix- oder Analogkonfiguration angeordnet und in Gruppen ferngesteuert durch Mittel (24) zur Erzeugung und Behandlung von Signalen verbunden sind, dadurch gekennzeichnet, dass es darin besteht, wenigstens einen Schallwandler (12) vom nicht-gerichteten Typ zum gleichzeitigen Empfangen eines selben Signales an dem Schallwandler (12) und der Antenne (10) zu verwenden und die empfangenen Signale zu vergleichen, um mögliche Festechos in dem durch die Antenne empfangenen Signal zu identifizieren und zu verifizieren, ob sich die Antenne (10) und die verbundenen Schaltungen (14, 16, 18, 20, 22, 24) in einem nominalen Funktionszustand befinden oder nicht.

2. Verfahren nach Anspruch 1, dadurch gekennzeichnet, dass es darin besteht, mittels der Antenne (10) einen Zug von Signalen zu emittieren, mittels der Antenne (10) und des nicht-gerichteten Schallwandlers (12) zurückgestreute oder reflektierte Signale, welche den emmitierten Signalen entsprechen, zu empfangen und die durch die Antenne und durch den genannten Schallwandler empfangenen Signale zu vergleichen, um die Festechos zu identifizieren.

3. Verfahren gemäß Anspruch 1 oder 2, dadurch gekennzeichnet, dass es darin besteht, mehrere nicht-gerichtete Schallwandler (12) zum Empfangen der genannten Signale zu verwenden und die empfangenen Signale in Richtung und Entfernung des Hindernisses, welche die Festechos zurückstrahlen, abzuleiten.

4. Verfahren nach einem der vorhergehenden Ansprüche, dadurch gekennzeichnet, dass es darin besteht, mittels der Antenne (10) und des genannten nicht-gerichteten Schallwandlers (12) das Umfeldrauschen einzufangen, die eingefangenen Signale zu vergleichen und abzuleiten, ob die Antenne (10) und die Mittel, welche mit der Verkabelung (14, 18, 22) von Relais (16), Verstärker (20) verbunden sind, sich zur Erzeugung und Behandlung von Signalen (24) in einem nominalen Funktionszustand befinden oder nicht.

5. Verfahren nach einem der vorhergehenden Ansprüche, dadurch gekennzeichnet, dass es darin besteht, einen Zug von Signalen zunächst über einen der Emissionswege (22), dann über den anderen, zu emittieren, diese Signalezüge mittels des genannten nicht-gerichteten Schallwandlers (12) einzufangen, die eingefangenen Signale zu vergleichen und davon abzuleiten, ob sich die Emissionswege in einem nominalen Funktionszustand befinden oder nicht.

6. Verfahren gemäß einem der vorhergehenden Ansprüche, dadurch gekennzeichnet, dass es darin besteht, das Umfeldrauschen mittels des nicht-gerichteten Schallwandlers (12) einzufangen, es mittels der Funktion von Phasen- und Amplitudentransformation zwischen diesem Schallwandler und der Antenne (10) zu behandeln und es von dem von der Antenne eingefangen Signal zu subtrahieren, um das Signal-/Rausch-Verhältnis der Antenne zu verbessern.

7. Verfahren nach einem der vorhergehenden Ansprüche, dadurch gekennzeichnet, dass der vorgenannte, nicht-gerichtete Schallwandler (12) ein Schallwandler der Antenne oder auch ein von dieser Antenne unabhängiger Schallwandler ist.

8. Verfahren nach einem der vorhergehenden Ansprüche, dadurch gekennzeichnet, dass die vorgenannten Prüfungen in Realzeit und regelmäßig durchgeführt werden und das die Prüfungsergebnisse in einem Speicher gespeichert und untereinander verglichen werden, um die Stabilität und die Nominalcharakteristik der Antenne und der verbundenen Schaltungen nachzuweisen oder gegebenenfalls um den Grad der Verschlechterung der Antenne und der verbundenen Schaltungen zu quantifizieren.

## Claims

1. A method of testing an acoustic array directional antenna comprising a plurality of acoustic transducers (12) disposed side by side in a matrix-type configuration and associated in groups driven by means (24) for generating and processing signals, the method consisting in using at least one acoustic transducer (12) of non-directional type for receiving a given signal simultaneously via this transducer (12) and via the antenna (10), and in comparing the received signals to identify possible fixed echoes in the signal received by the antenna and for verifying whether or not the antenna (10) and the associated circuits (14, 16, 18, 20, 22, 24) are in a nominal operating state.

2. A method according to claim 1, consisting in using the antenna (10) to emit a signal train, in using the antenna (10) and the non-directional tranducer (12) to receive reflected or backscatered signals corresponding to the emitted signals, and in comparing the signals received by the antenna and by said transducer to identify fixed echoes.

3. A method according to claim 1 or 2, consisting in using a plurality of non-directional transducers (12) to receive said signals, and to deduce from the received signals the direction and the range of the obstacles returning the fixed echoes.

4. A method according to claim 1, consisting in picking up ambient noise by means of the antenna (10) and by means of said non-directional transducer (12), in comparing the picked-up signals, and in deducing therefrom whether or not the antenna and the associated cabling (14, 18, 22), relay (16), amplification (20), and signal generation and processing means (24) are in a nominal operating state.

5. A method according to any one of preceding claims, consisting in emitting a signal train firstly over one of the emission paths (22) then over the other, in picking up said signal trains by means of said non-directional transducer (12), in comparing the picked-up signals, and in deducing therefrom whether or not the emission paths are in a nominal operating state.

6. A method according to any one of the preceding claims, consisting en picking up ambient noise by means of non-directional transducer, in processing it by means of the phase and amplitude transfer function between said transducer and the antenna (10), and in subtracting it from the signal picked up by the antenna to increase the signal/noise ratio of the antenna.

7. A method according to claim 1, characterized in that the above-mentioned non-directional transducer (12) is one of the transducer of the antenna or is a tranducer that is independent from the antenna transducers.

8. A method according to claim 1, characterized in that the above-mentioned method of testing is performed en real time and on regular basis, and wherein the results of the tests are stored in memory and compared with one another to reveal the stability and the nominal nature of the antenna and the associated circuits, or possibly to quantify the degradation of the antenna and of the associated circuits.
